# EUROPEAN PATENT SPECIFICATION

(11) **EP 2 986 473 B1**
(45) Date of publication and mention of the grant of the patent: **07.11.2018**
(21) Application number: 13882556.7
(22) Date of filing: 05.09.2013
(51) Int. Cl.: B60R 21/0134, B60R 21/0136, B60R 21/0132, B60R 21/34

(54) **SYSTEM FOR CONTROLLING THE DEPLOYMENT OF AN EXTERNAL SAFETY DEVICE**
SYSTEM ZUR STEUERUNG DER AUSLÖSUNG EINER EXTERNEN SICHERHEITSVORRICHTUNG
SYSTÈME DE COMMANDE DE DÉPLOIEMENT D'UN DISPOSITIF DE SÉCURITÉ EXTERNE

(30) Priority: 17.04.2013 WO PCT/SE2013/050418
(43) Date of publication of application: 24.02.2016
(73) Proprietor: Veoneer Sweden AB, 447 83 Vårgårda (SE); Östling, Martin, 50733 Brämhult (SE); Loisy, Aurore, 60590 Villers Sur Trie (FR)
(72) Inventor: ÖSTLING, Martin, S-50733 Brämhult (SE); LOISY, Aurore, F-60590 Villers Sur Trie (FR); LE MERRER, Yann, F-75020 Paris (FR)
(74) Representative: Sandstedt, Jonas Sven James
(86) International application number: PCT/SE2013/051033
(87) International publication number: WO 2014/171871

(56) References cited:
- EP-A1- 2 371 629
- WO-A1-2009/138293
- DE-A1-102005 005 959
- DE-A1-102006 008 636
- DE-A1-102012 000 789
- GB-A- 2 431 623
- GB-A- 2 436 692
- JP-A- 2002 092 792
- US-A1- 2004 107 033
- US-A1- 2007 045 026

## Description

### DESCRIPTION OF THE INVENTION

The present invention relates to a system for sensing a motor vehicle impact and adjusting the deployment of an external safety device.

Today, many vehicles are constructed to comprise at least one exterior airbag, intended to be inflated in the case of a collision with moving objects, such as pedestrians, cyclists or animals and to alleviate the collision force that the moving object is subjected to.

In order to further minimize the damages afflicted to the moving object in the event of such an impact, it has been proposed to use some kind of hood lifting arrangements. These arrangements are generally constructed so that the rear part of the hood, i.e. the part closest to the windscreen, is lifted in the event of a collision with a moving object. Arrangements of this type are disclosed in for example WO2007/067121 and EP2256007.

For any external airbag system to operate properly, a robust sensing system is necessary. Unlike crash sensors which trigger deployment while the vehicle is crushing and decelerating, the sensing system for an external airbag may anticipate an impact before it has occurred. This critical "Time Before Collision" is related to the time to deploy the actuator (e.g. 30-200 ms) and the clearance distance in front of the vehicle (e.g. 100-800 mm). Inadvertent deployment is not only costly but may temporarily disable the vehicle. Moreover, since the deployment of an airbag is achieved through a release of energy, deployment at an inappropriate time may result in undesirable effects. This invention is related to a sensing system for an external airbag safety system which addresses these design concerns.

Radar and ultrasonic detection systems have been studied and employed for motor vehicles for many years. Radar systems for motor vehicles operate in that a radio frequency signal, typically in the microwave region, is emitted from an antenna on the vehicle and the reflected-back signal is analysed to reveal information about the reflecting target. Such systems have been considered for use in active braking systems for motor vehicles, as well as obstacle detection systems for vehicle drivers. Radar sensing systems also have applicability in deploying external airbags. Radar sensors provide a number of valuable inputs, including the ability to detect the range to the closest object with a high degree of accuracy (e.g. 5 cm). They can also provide an output enabling measurement of closing velocity to a target with high accuracy. The radar cross section of the target and the characteristics of the return signal may also be used as a means of characterizing and identifying moving objects.

An alternative means for detecting and identifying moving objects is a vision system comprising one or more video cameras used for detecting objects. A vision system for a vehicle identifies and classifies objects located proximate a vehicle. The system comprises a sensor array that produces imagery that is processed to generate depth maps of the scene proximate a vehicle. The depth maps are processed and compared to pre-rendered templates of target objects that could appear proximate the vehicle. A target list is produced by matching the pre-rendered templates to the depth map imagery. The system processes the target list to produce target size and classification estimates. The target is then tracked as it moves near a vehicle and the target position, classification and velocity are determined. A further alternative object detection system for a vehicle comprises an infrared camera for gathering an image of at least a part of the surroundings of the vehicle; and a processor for applying an algorithm to at least a part of the image gathered by the camera, the algorithm identifying non-relevant hot or warm objects detected by the camera and reducing the brightness and/or distinctiveness of the non-relevant objects in the image.

A classification system is used for classifying objects in the vicinity of a vehicle. The system typically comprises a video/infrared camera for gathering camera data, a reflected radiation system for gathering reflected radiation data, and a classifier. Raw data from the video/infrared camera and the reflected radiation system can be combined and analysed by the classifier, the classifier being configured to provide an output relating to the type of an object that appears in data gathered by both the camera and the reflected radiation system.

Existing object classifiers comprise computer programs which are operable to analyse data from a vehicle sensor, such as a camera or radar system. The classifier is trained with exposure to many different types of object in different circumstances, so that the program is able to make an accurate determination as to the type of a new kind of object that is detected. Known types of objects can be stored in a database for future reference. In the subsequent text, the term "pre-crash sensor" will be used for vehicle sensors comprising a camera or a radar/ultrasonic system.

A vehicle is also provided with one or more contact sensors, such as accelerometers or pressure sensors, for detecting an actual impact. In the subsequent text, the term "in-crash sensor" will also be used for this type of contact sensors. Modern vehicles can be provided with 5-10 contact sensors across a front bumper or similar suitable portion of the vehicle.

When it is determined by vehicle crash sensors that an impact is imminent, or that crash is occurring, one or more of these external safety systems may be deployed, or a safety system may be deployed in one of a plurality of possible modes, depending in part upon the type of the other object that is involved. If it appears that the vehicle is about to strike a pedestrian, then the external safety system in the form of an external air-bag and/or a bonnet lifter may be activated, but if the vehicle is about to strike an inanimate object such as a tree then there is no need for these protection systems to be deployed. Accurate classification of objects in the vicinity of a vehicle is therefore desirable for vehicle safety systems to be activated in the most appropriate manner.

Although information obtained from pre-crash sensors yield valuable data, exclusive reliance upon a pre-crash sensor signal for deploying an external airbag has certain negative consequences. As mentioned previously, deployment of the external airbag is a significant event and should only occur when needed in an impending impact situation. Pre-crash sensors are prone to "false-positive" (FP) indications. These are typically due to phenomena such as a ground reflection, projection of small objects, and software misinterpretation, which faults are also referred to as "fooling" and "ghosting". For example, a small metal object with a reflector type geometry can return as much energy as a small car and as such can generate a collision signal in the radar even when the object is too small to damage the vehicle in a substantial way. Also, there may be "near miss" situations where a target is traveling fast enough to avoid collision, yet the pre-crash sensor would provide a triggering signal for the external safety system.

The relative speed is a measure for the classification of objects. It can be used to establish, for example, whether the relevant object is at rest or whether it moves at a certain speed. Since pedestrians, for example, only have limited maximum speed, it is easy to distinguish pedestrians from vehicles. This may then be used in particular also to take into account the severity of an accident. Thus this makes it possible for the device according to the present invention to be able to make a triggering decision for the actuator system on the basis of speed. With the aid of speed information, the impact signal becomes easier to differentiate as to whether it involves a pedestrian, a cyclist or another object. Including the speed thus helps to prevent a false triggering of the actuator system. Overall this results in a more precise evaluation of the impact signal, that is, the signal from the contact sensor system. For example, a fast and light object may provide a similar impact signal as a slow and heavy object. This shows that the knowledge of the speed expands the decision space by a dimension such that a classification of the different objects is improved and thereby also the decision for triggering the actuator system. In the subsequent text, the term "pedestrian" should be interpreted as including any moving object for which the external safety system is suitable, i.e. pedestrians and cyclists, as well as animals.

It is therefore an object of the present invention to provide an improved vehicle safety system to overcome or to mitigate the above problems.

The invention relates to a vehicle safety system comprising an external safety system for protecting a pedestrian. The vehicle safety system is provided with a device for activating the external safety system, which device is connected to a pre-crash sensor system and an in-crash sensor system, of the types indicated above. The device is arranged to perform an object classification of a first signal from the pre-crash sensor system. First, the object classification determines whether an object is detected or not. Second, if an object is detected, the object classification determines whether the object is moving. In this case, the object classification can also determine if a non-moving object is a pedestrian or a fixed object. Third, if the object is moving, the object classification can determine whether the object is a pedestrian, a cyclist or similar.

The device is arranged to determine a threshold for the in-crash sensor system as a function of the object classification. The device is arranged to set a first threshold as a function of the first signal indicating no object detected or an object classified as a pedestrian. Also, the device is arranged to set a second threshold, higher than the first threshold, as a function of the first signal indicating an object classified as a non-pedestrian. Finally, the device is arranged to compare a second signal from the in-crash sensor system with the threshold. If the comparison indicates that at least one predetermined condition is fulfilled, the external safety system is activated if the set threshold is exceeded.

According to the invention, the device can further be arranged to determine a speed threshold relative to a nominal speed threshold for the in-crash sensor system as a function of the object classification. A vehicle safety system of this type can be operative in a predetermined vehicle speed range, for instance between 20 km/h and 50 km/h. In this case, the nominal speed threshold is the minimum speed at which the vehicle safety system is active, that is 20 km/h.

According to a first example the first signal indicates that no object is detected. In this case the device is arranged to set the speed threshold higher than the nominal speed threshold as a function of the first signal. The minimum speed at which the vehicle safety system is active is set to, for instance, 30 km/h to make the operative range 30-50 km/h.

According to a second example the first signal indicates that an object classified as a pedestrian is detected. In this case the device is arranged to set the speed threshold lower than the nominal speed threshold as a function of the first signal. The minimum speed at which the vehicle safety system is active is set to, for instance, 15 km/h to make the operative range 15-50 km/h.

According to a third example the first signal indicates that an object classified as a non-pedestrian is detected. In this case the device is arranged to set the speed threshold higher than the nominal speed threshold as a function of the first signal. The minimum speed at which the vehicle safety system is active is set to, for instance, 30 km/h to make the operative range 30-50 km/h.

According to the invention, the external safety system can further comprise two or more zones, which zones are provided with a pre-crash sensor system and separately controlled external safety systems for each zone. Examples of such zones can comprise a first and a second zone covering the right and left side of the vehicle, respectively, or a right, left and centre zone covering the front of the vehicle. Preferably, but not necessarily, a single pre-crash sensor system can be configured to cover all zones using a suitable camera or a radar/ultrasonic system as described above.

Alternatively, adjacent zones can be provided with individual pre-crash sensor systems arranged to provide continuous cover, in order to avoid any dead angles.

After performing an object classification, which has been described above, the device is arranged to determine a threshold for the in-crash sensor system as a function of the object classification. The device is arranged to determine an individual threshold for each zone, as a function of a first signal from the pre-crash sensor system. The pre-crash sensor system is arranged to monitor all zones and will issue an individual first signal for each zone. The external safety system in each zone can be activated individually if the set threshold for a particular zone is exceeded. The use of multiple zones allows for multiple target tracking, that is, separate targets can be tracked in each zone.

For instance, if the vehicle is travelling along a continuous obstacle, such as a snow bank, the pre-crash sensor system can generate a first signal for the zone adjacent the obstacle that is used for performing an object classification. When it is determined that a fixed object is detected, a higher threshold can be set for this zone. This threshold is set independently of the thresholds set for any other zone. As indicated above, the device is arranged to determine a threshold for the in-crash sensor system as a function of the object classification. For example, the device can be arranged to set a first threshold as a function of the first signal indicating no object detected or an object classified as a pedestrian for the zone remote from the continuous obstacle. At the same time, the device can be arranged to set a second threshold, higher than the first threshold, as a function of the first signal indicating an object classified as a non-pedestrian, e.g. a snow bank, for the zone adjacent the continuous obstacle. This arrangement reduces the risk of false triggering of the external safety system in one zone, caused by a detected non-pedestrian objects, while allowing triggering of the external safety system in another zone, caused by a detected pedestrian.

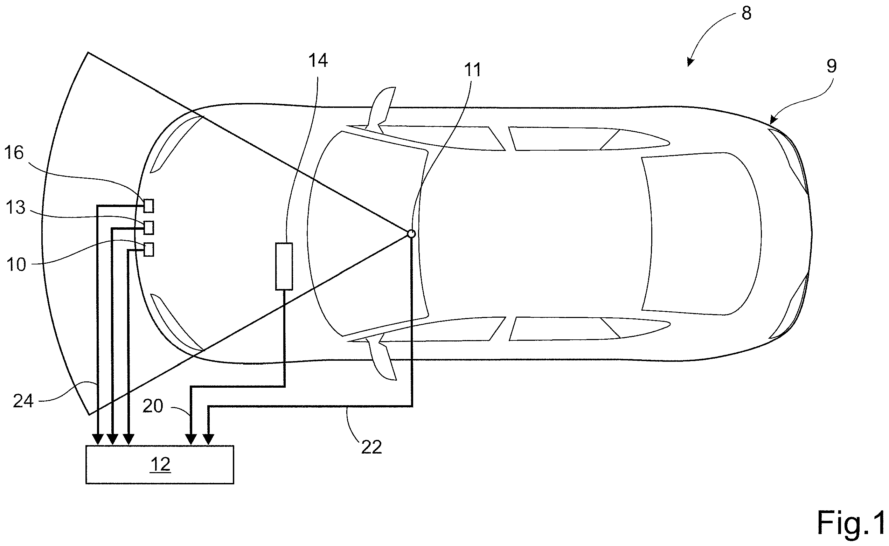

A vehicle safety system according to the invention preferably comprises a pre-crash sensor system that has a field of view of less than 180°. When using multiple zones, the sum of all individual angles of field of view for these zones is less than 180°. For instance, for two zones, covering the right and left side of the vehicle respectively, the field of view for each zone is less than 90°. For three zones, covering the right and left side and a central sector of the vehicle respectively, the field of view for each zone is less than 60°. The left/right zones can have the same angle of view, but do not necessarily have the same angle of view as the central zone. For an external safety system for protecting a pedestrian, the field of view is inherently measured relative to the main direction of travel of the vehicle (see Fig.1).

The external safety system preferably comprises components arranged to be activated sequentially. A system comprising multiple components can be provided with at least a pyrotechnic hood lifter and at least one pedestrian protection airbag. In one example, pyrotechnic hood lifter can be activated first and a pedestrian protection airbag covering the windscreen, an A-pillar or similar can be activated subsequently.

The invention further relates to a device for activating an external safety system for protecting a pedestrian. The activating device is connected to a pre-crash sensor system and an in-crash sensor system, as defined above. The device comprises an arrangement for performing an object classification of a first signal from the pre-crash sensor system, and an arrangement for determining a threshold for the in-crash sensor system as a function of the object classification. The device further comprises an arrangement for setting a first threshold as a function of a first signal indicating no object detected or an object classified as a pedestrian. The device also comprises an arrangement for setting a second threshold, higher than the first threshold, as a function of a first signal indicating an object classified as a non-pedestrian. Finally, the device comprises an arrangement for comparing a second signal from the in-crash sensor system with the threshold. If the comparison indicates that at least one predetermined condition is fulfilled, the device is activated if the threshold is exceeded.

According to the invention the device comprises an arrangement for determining a speed threshold relative to a nominal speed threshold for the in-crash sensor system as a function of the object classification. A device of this type can be active in a predetermined vehicle speed range, for instance between 20 km/h and 50 km/h. In this case, the nominal speed threshold is the minimum speed at which the vehicle safety system is active, that is 20 km/h.

According to a first example the device comprises an arrangement for setting the speed threshold higher than the nominal speed threshold as a function of the first signal indicating no object detected. The minimum speed at which the vehicle safety system is active is set to, for instance, 30 km/h to make the operative range 30-50 km/h.

According to a second example the device comprises an arrangement for setting the speed threshold lower than the nominal speed threshold as a function of the first signal indicating an object classified as a pedestrian. The minimum speed at which the vehicle safety system is active is set to, for instance, 15 km/h to make the operative range 15-50 km/h.

According to a second example the device comprises an arrangement for setting the speed threshold higher than the nominal speed threshold as a function of the first signal indicating an object classified as a non-pedestrian. The minimum speed at which the vehicle safety system is active is set to, for instance, 30 km/h to make the operative range 30-50 km/h.

The invention also relates to a method for activating an external safety system for protecting a pedestrian. The system comprises a device for activating the external safety system, wherein the device is connected to a pre-crash sensor system and an in-crash sensor system. The device is arranged to perform an object classification of a first signal from the pre-crash sensor system. The method involves the steps of:
- performing an object classification of a first signal from the pre-crash sensor system;
- determining a threshold for the in-crash sensor system as a function of the object classification;
- setting a first threshold as a function of a first signal indicating no object detected or an object classified as a pedestrian;
- setting a second threshold, higher than the first threshold, as a function of a first signal indicating an object classified as a non-pedestrian; and
- comparing a second signal from the in-crash sensor system with the threshold, and activating the device if the threshold is exceeded.

According to the invention, the method can further involve determining a speed threshold relative to a nominal speed threshold for the in-crash sensor system as a function of the object classification.

According to a first example, the method involves setting the speed threshold higher than the nominal speed threshold as a function of the first signal indicating no object detected. According to a second example, the method involves setting the speed threshold lower than the nominal speed threshold as a function of the first signal indicating an object classified as a pedestrian. According to a third example, the method involves setting the speed threshold higher than the nominal speed threshold as a function of the first signal indicating an object classified as a non-pedestrian.

The method can further involve using an external safety system comprising two or more zones, provided with a pre-crash sensor system, and performing an object classification of a first signal from the pre-crash sensor system. Individual thresholds can be determined for each zone, as a function of a first signal from the pre-crash sensor system. The external safety system in each zone can be activated individually if the set threshold for the respective zone is exceeded.

Activation is performed if the comparison of the first and second signal indicates that at least one predetermined condition is fulfilled. A number of advantages are obtained by means of the present invention. The present invention provides for an algorithm to take into account the speed between the vehicle and the object, such as a pedestrian, in order to be able precisely to infer the impacting object from the impact signal, that is, the signal of an in-crash sensor system. The device according to the invention when used for activating an actuator system for protecting a pedestrian, a cyclist, or similar has the advantage that the algorithm used for activating the actuator system uses input signals from both a pre-crash sensor system and an in-crash sensor system. Advantageously, the signal of the pre-crash sensor system is used for determining a threshold level for the in-crash sensor system to generate a triggering signal for the external safety system. The signal of the in-crash sensor system is compared to a threshold determined by the pre-crash sensor system, whereupon the signal of the in-crash sensor system will determine whether to trigger the external safety system or not. According to the invention it is also possible to take into consideration the relative speed into account in evaluating the signal from the in-crash sensor system.

### BRIEF DESCRIPTION OF THE DRAWINGS

The present invention will now be described more in detail with reference to the appended schematic drawings, where:
- Figure 1: shows a schematic plan view of a vehicle provided with a safety system according to the invention;
- Figure 2A: shows a schematic flow chart related to the processing of the sensor output signals of the safety system;
- Figure 2B: shows a schematic alternative flow chart for the signal processing; and
- Figure 3: shows a schematic plan view of a vehicle provided with an alternative embodiment of the invention.

### DETAILED DESCRIPTION

Figure 1 shows a schematic plan view of a vehicle provided with a safety system according to the invention. In Figure 1, a sensor system 8 is shown with an associated vehicle 9. The sensor system 8 is configured for a forward looking application and has the ability to sense an approaching object and prepare the vehicle 9 for an impact with a pedestrian, a cyclist or similar. In this example the application is shown with single sensors for radar and vision, respectively, but it is also possible to provide multiple sensors having overlapping fields of view.

The sensor system 8 includes a radar sensor 10 which receives a radio frequency signal, preferably in the microwave region emanating from an antenna (not shown). A radar sensor 10 provides radar output signal 20 to an electronic control module (ECM) 12. A vision sensor 11 is preferably mounted to an upper portion of the vehicle 9, such as, along the windshield header aimed forward to provide vision information. In this example, the field of view of the sensor 11 is less than 180°. The vision sensor 11 provides vision output signal 22 to the ECM 12.

The sensor system 8 further includes one or more contact sensors 16 (one shown), such as accelerometers or pressure sensors, for detecting an actual impact. The contact sensor 16 provides contact output signal 24 to the ECM 12. The contact sensors 16 are also referred to as in-crash sensors. The radar sensor 10 and the vision sensor 11 are also referred to as pre-crash sensors. The ECM 12 combines radar output signal 20 the vision output signal 22 and contact output signal 24 to determine if a collision is imminent and whether to adjust the threshold for the in-crash sensors.

The ECM 12 is in electrical communication with a schematically indicated external airbag 13, which can be located in the vicinity of the front bumper and/or the windshield. Control signals are also received by a hood lifter 14 from the ECM 12. The deployment timing of the external airbag 13 and the hood lifter 14 can be adjusted when an impact is detected by the in-crash sensors, thereby reducing the potential impact for a pedestrian.

Further control signals that can adjust the deployment timing of additional expandable structures (not shown) based on the radar or vision output and the in-crash sensor output, can be transmitted by the ECM 12, which is in electrical communication with such expandable structures. Examples of additional expandable structures include safety devices, such as, expanding bumpers or external airbags covering the windshield and/or the A-pillars on either side thereof, The deployment of one or more of the expandable structures can be timed to better manage the effect of the expandable structure, in response to the type, bearing or closing velocity of an object about to impact the vehicle 9 when an impact is detected by the in-crash sensors.

Although, specific examples are provided above it is readily contemplated in accordance with the present invention, that one or all of the measurements provided by each of the sensors may be used in adjusting various deployment characteristics of a safety device as required.

For instance, it can be desirable to trigger a number of safety devices in sequence. One example of sequentially triggered devices can be a pyrotechnical hood lifter that is triggered before a pedestrian protection airbag for the windshield, as a pedestrian will often impact the hood prior to the windshield. The order and timing of a triggering sequence is determined by the ECM 12 in response to the type, bearing and closing velocity of an object about to impact the vehicle 9 when an impact is detected by the in-crash sensors.

According to the invention, information obtained from the pre-crash sensors yield valuable data for deploying an external airbag. In order to avoid incorrect deployment of the external airbag and other parts of the safety system it is desirable to reduce "false-positive" (FP) indications and increase "true-positive" (TP) indications from the sensors and the ECM 12. This is achieved by combining the information from the pre-crash sensors and the in-crash sensors. Information from the pre-crash sensors is used for setting a threshold for the in-crash sensor system.

The radar sensor 10 analyzes a radio frequency signal reflected off an object to obtain a range measurement, a closing velocity, and a radar cross section. A time of impact estimate is calculated based on range measurement and the closing velocity. The range measurement is the distance between the object and vehicle 9. The radar sensor 10 provides distance information with high accuracy, typically within 5 cm. The closing velocity is a measure of the relative speed between the object and the vehicle 9. The time of impact estimate is compared with the necessary time to deploy the safety device, such as an external air bag. Typically deployment time of an external airbag is between 200 ms and 30 ms. In addition, the range measurement is compared with the necessary clearance distance from the vehicle 9 to deploy the safety device. Typically clearance distance for an external air bag is between 100 mm to 800 ms. The closing velocity is also used to determine the severity of impact. High closing velocities are associated with a more severe impact, while lower closing velocities are associated with a less severe impact.

The radar cross section is a measure of the strength of the reflected radio frequency signal. The strength of the reflected signal is generally related to the size and shape of the object. The size and shape is used to access the threat of the object. The ECM 12 processes the time of impact, severity of impact, and threat assessment to provide a radar output signal.

The vision sensor 11 provides means for a vision range measurement, a bearing valve means for determining the angular deviation from a longitudinal axis through the center of the vehicle, means for determining the bearing rate (the rate of change of angular deviation), and means for determining the physical size of the object. These measurements allow the ECM 12 to provide a vision sensor output signal.

The ECM 12 uses one or both of the radar and vision output signals to perform a classification of the object in order to provide a pre-crash sensor output signal indicating that;
1) a correct object has been identified, i.e. a pedestrian, cyclist, etc.
2) an incorrect object has been identified, i.e. a non-pedestrian object; or
3) no object has been identified.

Similarly, by processing the information from one or more contact sensors 16, such as accelerometers or pressure sensors for detecting an actual impact, the ECM 12 can provide an in-crash sensor output signal indicating that;
1) a correct object has been identified, i.e. a pedestrian, cyclist, etc.
2) an incorrect object has been identified, i.e. a non-pedestrian object; or
3) no object has been identified.

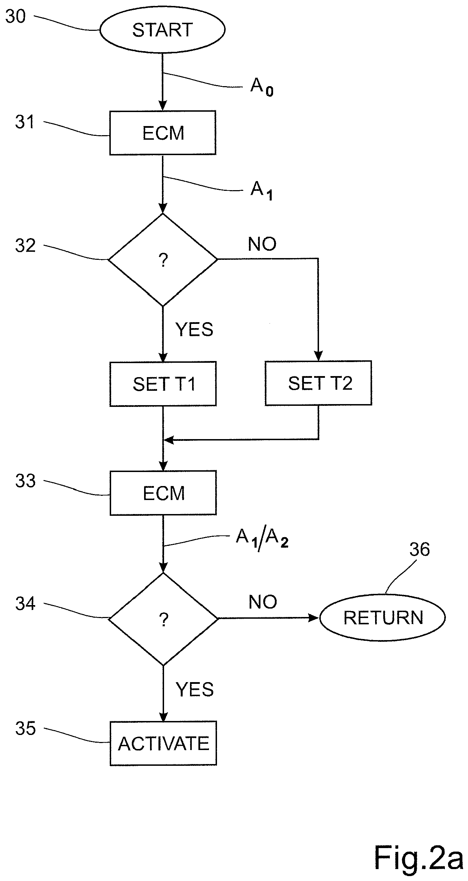

Figure 2A provides a signal and decision flow chart related to the processing of the pre-crash sensor output signal and the in-crash sensor output signal to determine if the safety system should be activated. The process is started 30 when the ECM 12 receives multiple input signals comprising a radar output signal 20, a vision output signal 24 and a contact output signal 24, indicated by arrow A0. In a first step 31 the ECM 12 performs an object classification of the output signals 20, 22 from the pre-crash sensor system to generate a first signal in the form of a pre-crash output signal A1. In a second step 32 the pre-crash output signal A1 is used for setting a threshold for the in-crash sensor system based on whether an object is detected or not. If it is determined that a correct object or no object is detected (YES) then a first threshold T1 is set for the in-crash sensor system. If it is determined that an object has been detected, but not a correct object (NO) then a second, relatively higher threshold T2 is set for the in-crash sensor system. This higher threshold T2 for the in-crash sensor system is used when the detected object is non-pedestrian.

In a third step 33 the ECM 12 processes the output signal 24 from the in-crash sensor system to generate a second signal in the form of an in-crash output signal A2. In a fourth step 34 the in-crash output signal A2 is combined with the pre-crash output signal A1 to determine whether to activate (YES) the safety system or not (NO). The control algorithm of the ECM 12 evaluates the following conditions for the in-crash output signal A2 combined with the pre-crash output signal A1 before activating the safety system:
Case 1: If it is determined that the in-crash output signal A2 indicates that a correct object or no object is detected, when the pre-crash output signal A1 has indicated that a correct object is detected (YES), then the safety system is activated 35.
Case 2: If it is determined that the in-crash output signal A2 indicates that an object has been detected, but not a correct object, when the pre-crash output signal A1 has indicated that no object is detected (YES), then the safety system is activated 35.
Case 3: If it is determined that the in-crash output signal A2 indicates that a correct object is detected, when the pre-crash output signal A1 has indicated that an object has been detected, but not a correct object (YES), then the safety system is activated 35.

The ECM 12 also detects that a threshold has been exceeded before activating the safety system. In the first two cases the first, relatively lower threshold T1 is used for the in-crash sensor system, as the combined sensor decision is deemed to be a true positive (TP) triggering. In the third case the second, relatively higher threshold T2 is used for the in-crash sensor system, as the combined sensor decision is deemed to be a false positive (FP) triggering. Using a higher threshold T2 for the in-crash sensor system will increase the probability of a correct activation of the safety system. If none of the above cases are detected (NO), then the process returns 36 to start 30.

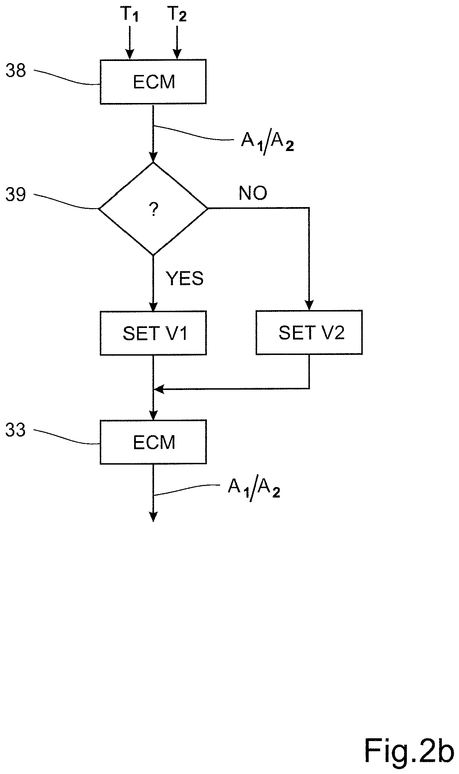

Figure 2B provides an alternative signal and decision flow chart related to the processing of the pre-crash sensor output signal and the in-crash sensor output signal. According to this alternative signal and decision flow chart the speed threshold for the vehicle's in-crash system is allowed to be varied, in addition to the contact thresholds T1 and T2. A typical vehicle safety system is active in an operative range of 20-50km/h, where the nominal lower threshold is 20 km/h.

According to the flow chart of Figure 2B, the process is the same as in Figure 2A until the setting of the contact thresholds T1, T2 (Fig.2A; third step 33). When the contact thresholds T1, T2 have been set, the ECM 12 uses the pre-crash output signal A1 in combination with the in-crash output signal A2 to determine whether to vary the lowest speed threshold of the operative range of 20-50km/h. Depending on the combination of the output signals A1, A2, the nominal speed threshold can either be set to a lower value V1 or to a higher value V2. The control algorithm of the ECM 12 evaluates the following conditions before setting the speed threshold:
Case 1: If it is determined that the pre-crash output signal A1 has indicated that no object is detected and the first, relatively lower threshold T1 is used for the in-crash sensor system, then the speed threshold V2 is set higher than the nominal speed threshold.
Case 2: If it is determined that the pre-crash output signal A1 has indicated that a correct object (e.g. a pedestrian) is detected and the first, relatively lower threshold T1 is used for the in-crash sensor system, then the speed threshold V1 is set lower than the nominal speed threshold.
Case 3: If it is determined that the pre-crash output signal A1 has indicated that an object, but not a correct object (e.g. a non-pedestrian) is detected and the first, relatively higher threshold T1 is used for the in-crash sensor system, then the speed threshold V2 is set higher than the nominal speed threshold.

In the first and third cases the pre-crash output signal A1 indicates no object detected or a non-pedestrian object detected. In these cases the chance of a sensor decision resulting in a possible false positive (FP) triggering can be reduced by increasing the nominal operative speed range from 20-50km/h to 30-50km/h. However, in the second case, the pre-crash output signal A1 indicates that a correct object is detected and the sensor decision is deemed to be a true positive (TP) triggering. In this case injuries to a pedestrian can be reduced by decreasing the nominal operative speed range from 20-50km/h to 15-50km/h, allowing the safety system to trigger at a relatively lower speed.

The present invention provides for an algorithm to take into account the speed between the vehicle and the object, such as a pedestrian, using a pre-crash sensor system, in order to precisely to infer the impacting object from the impact signal of an in-crash sensor system. The device according to the invention when used for activating an actuator system for protecting a pedestrian, a cyclist, or similar has the advantage that the algorithm used for activating the actuator system uses input signals from both a pre-crash sensor system and an in-crash sensor system. The signal of the pre-crash sensor system is used for determining a threshold level for the in-crash sensor system to generate a triggering signal for the external safety system. The signal of the in-crash sensor system is compared to a threshold determined by the pre-crash sensor system, whereupon the signal of the in-crash sensor system will determine whether to trigger the external safety system or not. According to the invention it is also possible to take into consideration the relative speed into account in evaluating the signal from the in-crash sensor system.

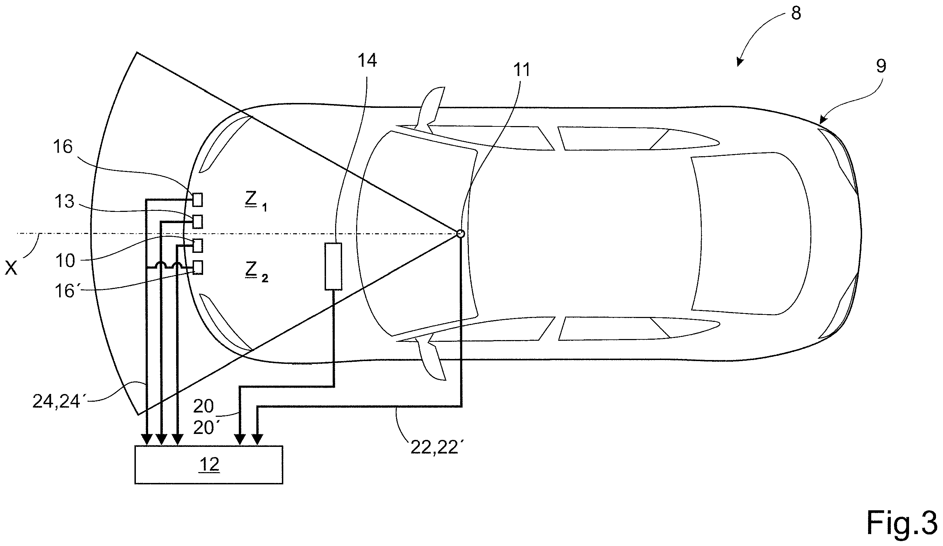

Figure 3 shows a schematic plan view of a vehicle provided with an alternative safety system according to the invention.

Using the reference numerals of Figure 1, Figure 3 shows a sensor system 8 is shown with an associated vehicle 9. The sensor system 8 is configured for a forward looking application and has the ability to sense an approaching object and prepare the vehicle 9 for an impact with a pedestrian, a cyclist or similar. In this example the application is shown with single sensors for radar and vision, respectively, but it is also possible to provide multiple sensors having overlapping fields of view.

In this example, the total field of view of the sensor 11 is less than 180° and is split into two zones Z1, Z2 covering the right and left side of the vehicle, respectively. In this example, both zones Z1, Z2 extend a predetermined angle to the right and left relative to a datum line X corresponding to a central longitudinal axis through the vehicle. The sensor system 8 includes a radar sensor 10 which receives a radio frequency signal, preferably in the microwave region emanating from an antenna (not shown). The radar sensor 10 provides radar output signals 20, 20' from each zone Z1, Z2 to an electronic control module (ECM) 12. A vision sensor 11 is preferably mounted to an upper portion of the vehicle 9, such as, along the windshield header aimed forward to provide vision information. The vision sensor 11 provides individual vision output signals 22, 22' from each zone Z1, Z2 to the ECM 12.

The sensor system 8 further includes one or more contact sensors 16, 16' for each zone Z1, Z2 (one shown), such as accelerometers or pressure sensors, for detecting an actual impact. Each zone Z1, Z2 is provided with individual contact sensors 16, 16' which provide contact output signals 24, 24' from each zone Z1, Z2 to the ECM 12. Figure 3 only shows one contact sensor per zone for reasons of clarity, but each of the indicated contact sensors 16 and 16' can represent multiple sensors distributed across the front of the vehicle. The contact sensors 16, 16' are also referred to as in-crash sensors. The radar sensor 10 and the vision sensor 11 are also referred to as pre-crash sensors. The ECM 12 combines radar output signal 20, 20', the vision output signal 22, 22' and contact output signals 24, 24' to determine if a collision is imminent in one or both zones Z1, Z2 and whether to adjust the threshold for the in-crash sensors in the respective zone.

The ECM 12 is in electrical communication with a schematically indicated external airbag 13. For reasons of clarity, only one airbag 13 is shown although the safety system can comprise individually controllable airbags in the respective zones, which airbags can be located in the vicinity of the left and right portions of the front bumper, the left and right portions of the windshield. Also, inflatable structures along each A-pillar can be provided. Control signals are also received by a hood lifter 14 from the ECM 12. The deployment timing of the external airbags 13 in the respective zone Z1, Z2 and the hood lifter 14 can be adjusted when an impact is detected by the in-crash sensors, thereby reducing the potential impact for a pedestrian.

Further control signals that can adjust the deployment timing of additional expandable or inflatable structures (not shown) based on the radar or vision output and the in-crash sensor output, can be transmitted by the ECM 12, which is in electrical communication with such expandable structures. Examples of additional expandable structures include safety devices, such as, expanding bumpers or external airbags covering the windshield and/or the A-pillars on either side thereof, The deployment of one or more of the expandable structures can be individually timed for one or more zones to better manage the effect of the expandable structure, in response to the type, bearing or closing velocity of an object about to impact the vehicle 9 when an impact is detected by the in-crash sensors.

Although, specific examples are provided above it is readily contemplated in accordance with the present invention, that one or all of the measurements provided by each of the sensors may be used in adjusting various deployment characteristics of a safety device as required.

For instance, it can be desirable to trigger a number of safety devices in sequence. One example of sequentially triggered devices can be a pyrotechnical hood lifter that is triggered before a pedestrian protection airbag for the windshield, as a pedestrian will often impact the hood prior to the windshield. The order and timing of a triggering sequence is determined by the ECM 12 in response to the type, bearing and closing velocity of an object about to impact the vehicle 9 when an impact is detected by the in-crash sensors.

It can also be desirable to trigger a number of safety devices individually in different zones. The pre-crash sensor system is arranged to monitor all zones and will issue an individual first signal for each zone. The external safety system in each zone can be activated individually if the set threshold for a particular zone is exceeded. The use of multiple zones allows for multiple target tracking. In this way it is possible to activate the external safety system for a detected first target, such as a pedestrian, in one zone while preventing actuation for a detected second target, such as a fixed object, in a second zone.

As in the example described for Figure 1 above, information obtained from the pre-crash sensors yield data for deploying one or more external airbag. In order to avoid incorrect deployment of the external airbag and other parts of the safety system it is desirable to reduce "false-positive" (FP) indications and increase "true-positive" (TP) indications from the sensors and the ECM 12. This is achieved by combining the information from the pre-crash sensors and the in-crash sensors. Information from the pre-crash sensors is used for setting a threshold for the in-crash sensor system.

The radar sensor 10 analyzes a radio frequency signal reflected off an object to obtain a range measurement, a closing velocity, and a radar cross section. For the example shown in Figure 3, this analysis is performed for each zone Z1, Z2 and an output signal is provided for the respective zone. A time of impact estimate for the respective zone is calculated based on range measurement and the closing velocity. The range measurement is the distance between an object and vehicle 9. The radar sensor 10 provides distance information with high accuracy, typically within 5 cm. The closing velocity is a measure of the relative speed between the object and the vehicle 9. The time of impact estimate is compared with the necessary time to deploy a safety device, such as an external air bag, in one or more zones. Typically deployment time of an external airbag is between 200 ms and 30 ms. In addition, the range measurement is compared with the necessary clearance distance from the vehicle 9 to deploy a safety device in one or more zones. Typically clearance distance for an external air bag is between 100 mm to 800 ms.

The closing velocity is also used to determine the severity of impact. High closing velocities are associated with a more severe impact, while lower closing velocities are associated with a less severe impact.

The radar cross section is a measure of the strength of the reflected radio frequency signal. The strength of the reflected signal is generally related to the size and shape of the object. The size and shape is used to access the threat of the object. The ECM 12 processes the time of impact, severity of impact, and threat assessment to provide a radar output signal.

The vision sensor 11 provides means for a vision range measurement, a bearing valve means for determining the angular deviation from a longitudinal axis through the center of the vehicle, means for determining the bearing rate (the rate of change of angular deviation), and means for determining the physical size of the object. These measurements allow the ECM 12 to provide a vision sensor output signal 22, 22' for each zone Z1, Z2.

As described in connection with Figures 2A and 2B above, the ECM 12 uses one or both of the radar and vision output signals 20,22; 20',22' to perform a classification of the object in order to provide a pre-crash sensor output signal. The object classification is performed individually for each zone Z1, Z2, based on the output signals from the pre-crash sensors and in-crash sensors covering the respective zone. For each zone, a pre-crash sensor output signal is provided, indicating that;
1) a correct object has been identified, i.e. a pedestrian, cyclist, etc.
2) an incorrect object has been identified, i.e. a non-pedestrian object; or
3) no object has been identified.

Similarly, by processing the information from one or more contact sensors 16 in each zone Z1, Z2, such as accelerometers or pressure sensors for detecting an actual impact, the ECM 12 can provide an in-crash sensor output signal for the respective zone indicating that;
1) a correct object has been identified, i.e. a pedestrian, cyclist, etc.
2) an incorrect object has been identified, i.e. a non-pedestrian object; or
3) no object has been identified.

Figure 2A provides a signal and decision flow chart related to the processing of the pre-crash sensor output signal and the in-crash sensor output signal to determine if the safety system should be activated, by setting suitable contact thresholds in response to the output signals. The setting of thresholds is performed individually for each zone, based on the output signals from the pre-crash sensors and in-crash sensors covering the respective zone. Hence, the example shown in Figure 3 uses the same process for setting thresholds as the example shown in Figures 1 and 2A, with the difference that the process is performed simultaneously for each zone to set individual thresholds for the respective zones.

Figure 2B provides an alternative signal and decision flow chart related to the processing of the pre-crash sensor output signal and the in-crash sensor output signal. As described above, this processing involves setting of speed thresholds in addition to the contact thresholds. The setting of contact and speed thresholds is performed individually for each zone, based on the output signals from the pre-crash sensors and in-crash sensors covering the respective zone. Hence, the example shown in Figure 3 uses the same process for setting thresholds as the example shown in Figures 1 and 2B, with the difference that the process is performed simultaneously for each zone to set individual thresholds.

## Claims

1. A vehicle safety system comprising an external safety system for protecting a pedestrian, and a device for activating the external safety system, the device being connected to a number of pre-crash sensor systems (10, 11) and an in-crash sensor system (16), the device being arranged to perform an object classification of a first signal from the pre-crash sensor system; **characterized in that** the external safety system comprising two or more zones (Z1, Z2) each provided with a pre-crash sensor system (10, 11); that the device is arranged to determine a threshold (T1, T2) for the in-crash sensor system as a function of the object classification; where the device is arranged to set a first threshold (T1) as a function of a first signal (A1) indicating no object detected or an object classified as a pedestrian; and to set a second threshold (T2), higher than the first threshold (T1), as a function of a first signal (A1) indicating an object classified as a non-pedestrian; that the device is arranged to compare a second signal from the in-crash sensor system with the threshold, whereby the external safety system is activated if the set threshold (T1, T2) is exceeded; and that the device is arranged to determine a speed threshold (V1, V2) relative to a nominal speed threshold for the in-crash sensor system as a function of the object classification, where the nominal speed threshold is the minimum speed at which the vehicle safety system is active.

2. A vehicle safety system according to claim 1, **characterized in that** the device is arranged to set the speed threshold (V2) higher than the nominal speed threshold as a function of the first signal indicating no object detected.

3. A vehicle safety system according to claim 1, **characterized in that** the device is arranged to set the speed threshold lower than the nominal speed threshold as a function of the first signal indicating an object classified as a pedestrian.

4. A vehicle safety system according to claim 1, **characterized in that** the device is arranged to set the speed threshold (V1) higher than the nominal speed threshold as a function of the first signal indicating an object classified as a non-pedestrian.

5. A vehicle safety system according to any one of claims 1-4, **characterized in that** the pre-crash sensor system has a field of view less than 180°.

6. A vehicle safety system according to any one of claims 1-5, **characterized in that** the external safety system comprises multiple pyrotechnic components (13, 14) arranged to be activated sequentially.

7. A vehicle safety system according to any one of claims 1-6, **characterized in that** the external safety system comprises at least a pyrotechnic hood lifter (14).

8. A vehicle safety system according to any one of claims 1-7, **characterized in that** the external safety system comprises at least one pedestrian protection airbag (13).

9. A vehicle safety system according to claim 1-8, **characterized in that** the device is arranged to determine individual thresholds (T1, T2; V1, V2) for each zone, as a function of a first signal (A1) from the pre-crash sensor system.

10. A vehicle safety system according to claim 9, **characterized in that** the external safety system in each zone is activated individually if the set threshold (T1, T2; V1, V2) is exceeded.

11. A device for activating an external safety system for protecting a pedestrian, the device being connected to a pre-crash sensor system (10, 11) and an in-crash sensor system (16), the device, comprising:
- an arrangement for performing an object classification of a first signal (A1) from the pre-crash sensor system (10, 11);
- an arrangement for determining a threshold (T1, T2) for the in-crash sensor system (16) as a function of the object classification;
- an arrangement for setting a first threshold (T1) as a function of a first signal (A1) indicating no object detected or an object classified as a pedestrian;
- an arrangement for setting a second threshold (T2), higher than the first threshold (T1), as a function of a first signal (A1) indicating an object classified as a non-pedestrian;
- an arrangement for comparing a second signal (A2) from the in-crash sensor system (16) with the threshold (T1, T2), the device being activated if the threshold is exceeded; and
- an arrangement for determining a speed threshold (V1, V2) relative to a nominal speed threshold for the in-crash sensor system as a function of the object classification, where the nominal speed threshold is the minimum speed at which the vehicle safety system is active.

12. A device according to claim 11, **characterized in** an arrangement for setting the speed threshold (V2) higher than the nominal speed threshold as a function of the first signal indicating no object detected.

13. A device according to claim 11, **characterized in** an arrangement for setting the speed threshold (V1) lower than the nominal speed threshold as a function of the first signal indicating an object classified as a pedestrian.

14. A device according to claim 11, **characterized in** an arrangement for setting the speed threshold (V2) higher than the nominal speed threshold as a function of the first signal indicating an object classified as a non-pedestrian.

15. Method for activating an external safety system for protecting a pedestrian which system comprises two or more zones (Z1, Z2), each provided with an pre-crash sensor system; a device for activating the external safety system, the device being connected to the pre-crash sensor systems (10, 11) and an in-crash sensor system (16) and being arranged to perform an object classification of a first signal from the pre-crash sensor system; the method involving the steps of:
- performing an object classification of a first signal (A1) from the pre-crash sensor system (10, 11);
- determining a threshold (T1, T2) for the in-crash sensor system (16) as a function of the object classification;
- setting a first threshold (T1) as a function of a first signal (A1) indicating no object detected or an object classified as a pedestrian;
- setting a second threshold (T2), higher than the first threshold (T1), as a function of a first signal (A1) indicating an object classified as a non-pedestrian;
- comparing a second signal (A2) from the in-crash sensor system (16) with the threshold (T1, T2), and activating the device if the threshold is exceeded; and
- determining a speed threshold (V1, V2) relative to a nominal speed threshold for the in-crash sensor system as a function of the object classification, where the nominal speed threshold is the minimum speed at which the vehicle safety system is active.

16. Method according to claim 15, **characterized by** setting the speed threshold (V2) higher than the nominal speed threshold as a function of the first signal indicating no object detected.

17. Method according to claim 15, **characterized by** setting the speed threshold lower than the nominal speed threshold as a function of the first signal indicating an object classified as a pedestrian.

18. Method according to claim 15, **characterized by** setting the speed threshold (V1) higher than the nominal speed threshold as a function of the first signal indicating an object classified as a non-pedestrian.

19. Method according to claim 15, **characterized by** determining an individual threshold (T1, T2) for each zone (Z1, Z2), as a function of a first signal (A1) from the pre-crash sensor system (10, 11).

20. Method according to claim 19, **characterized by** that the external safety system in each zone (Z1, Z2) is activated individually if the set threshold (T1, T2) is exceeded.

## Patentansprüche

1. Fahrzeugsicherheitssystem, das ein externes Sicherheitssystem zum Schutz eines Fußgängers und eine Vorrichtung zur Aktivierung des externen Sicherheitssystems umfasst, wobei die Vorrichtung mit mehreren Pre-Crash-Sensorsystemen (10, 11) und einem In-Crash-Sensorsystem (16) verbunden ist, wobei die Vorrichtung eingerichtet ist, eine Objektklassifizierung eines ersten Signals vom Pre-Crash-Sensorsystem auszuführen; **dadurch gekennzeichnet, dass** das externe Sicherheitssystem mindestens zwei Zonen (Z1, Z2) umfasst, die jeweils mit einem Pre-Crash-Sensorsystem (10, 11) versehen sind; dass die Vorrichtung eingerichtet ist, eine Schwelle (T1, T2) für das In-Crash-Sensorsystem in Abhängigkeit von der Objektklassifizierung zu bestimmen; wobei die Vorrichtung eingerichtet ist, eine erste Schwelle (T1) in Abhängigkeit von einem ersten Signal (A1) festzulegen, das kein detektiertes Objekt oder ein als Fußgänger klassifiziertes Objekt anzeigt; und eine zweite Schwelle (T2), die höher ist als die erste Schwelle (T1), in Abhängigkeit von einem ersten Signal (A1) festzulegen, das ein als Nicht-Fußgänger klassifiziertes Objekt anzeigt; dass die Vorrichtung eingerichtet ist, ein zweites Signal vom In-Crash-Sensorsystem mit der Schwelle zu vergleichen, wobei das externe Sicherheitssystem aktiviert wird, wenn die festgelegte Schwelle (T1, T2) überschritten wird; und dass die Vorrichtung eingerichtet ist, eine Geschwindigkeitsschwelle (V1, V2) bezogen auf eine nominale Geschwindigkeitsschwelle für das In-Crash-Sensorsystem in Abhängigkeit von der Objektklassifizierung zu bestimmen, wobei die nominale Geschwindigkeitsschwelle die minimale Geschwindigkeit ist, bei der das Fahrzeugsicherheitssystem aktiv ist.

2. Fahrzeugsicherheitssystem nach Anspruch 1, **dadurch gekennzeichnet, dass** die Vorrichtung eingerichtet ist, die Geschwindigkeitsschwelle (V2) höher als die nominale Geschwindigkeitsschwelle in Abhängigkeit vom ersten Signal festzulegen, das kein detektiertes Objekt anzeigt.

3. Fahrzeugsicherheitssystem nach Anspruch 1, **dadurch gekennzeichnet, dass** die Vorrichtung eingerichtet ist, die Geschwindigkeitsschwelle niedriger als die nominale Geschwindigkeitsschwelle in Abhängigkeit vom ersten Signal festzulegen, das ein als Fußgänger klassifiziertes Objekt anzeigt.

4. Fahrzeugsicherheitssystem nach Anspruch 1, **dadurch gekennzeichnet, dass** die Vorrichtung eingerichtet ist, die Geschwindigkeitsschwelle (V1) höher als die nominale Geschwindigkeitsschwelle in Abhängigkeit vom ersten Signal festzulegen, das ein als Nicht-Fußgänger klassifiziertes Objekt anzeigt.

5. Fahrzeugsicherheitssystem nach einem der Ansprüche 1 bis 4, **dadurch gekennzeichnet, dass** das Pre-Crash-Sensorsystem ein Sichtfeld von weniger als 180° aufweist.

6. Fahrzeugsicherheitssystem nach einem der Ansprüche 1 bis 5, **dadurch gekennzeichnet, dass** das externe Sicherheitssystem mehrere pyrotechnische Komponenten (13, 14) umfasst, die eingerichtet sind, nacheinander aktiviert zu werden.

7. Fahrzeugsicherheitssystem nach einem der Ansprüche 1 bis 6, **dadurch gekennzeichnet, dass** das externe Sicherheitssystem mindestens einen pyrotechnischen Motorhaubenaufsteller (14) umfasst.

8. Fahrzeugsicherheitssystem nach einem der Ansprüche 1 bis 7, **dadurch gekennzeichnet, dass** das externe Sicherheitssystem mindestens einen Fußgängerschutzairbag (13) umfasst.

9. Fahrzeugsicherheitssystem nach Anspruch 1 bis 8, **dadurch gekennzeichnet, dass** die Vorrichtung eingerichtet ist, einzelne Schwellen (T1, T2; V1, V2) für jede Zone in Abhängigkeit von einem ersten Signal (A1) vom Pre-Crash-Sensorsystem zu bestimmen.

10. Fahrzeugsicherheitssystem nach Anspruch 9, **dadurch gekennzeichnet, dass** das externe Sicherheitssystem in jeder Zone einzeln aktiviert wird, wenn die festgelegte Schwelle (T1, T2; V1, V2) überschritten wird.

11. Vorrichtung zur Aktivierung eines externen Sicherheitssystems zum Schutz eines Fußgängers, wobei die Vorrichtung mit einem Pre-Crash-Sensorsystem (10, 11) und einem In-Crash-Sensorsystem (16) verbunden ist, wobei die Vorrichtung Folgendes umfasst:
- eine Anordnung zum Ausführen einer Objektklassifizierung eines ersten Signals (A1) vom Pre-Crash-Sensorsystem (10, 11);
- eine Anordnung zum Bestimmen einer Schwelle (T1, T2) für das In-Crash-Sensorsystem (16) in Abhängigkeit von der Objektklassifizierung;
- eine Anordnung zum Festlegen einer ersten Schwelle (T1) in Abhängigkeit von einem ersten Signal (A1), das kein detektiertes Objekt oder ein als Fußgänger klassifiziertes Objekt anzeigt;
- eine Anordnung zum Festlegen einer zweiten Schwelle (T2), die höher ist als die erste Schwelle (T1), in Abhängigkeit von einem ersten Signal (A1), das ein als Nicht-Fußgänger klassifiziertes Objekt anzeigt;
- eine Anordnung zum Vergleichen eines zweiten Signals (A2) vom In-Crash-Sensorsystem (16) mit der Schwelle (T1, T2), wobei die Vorrichtung aktiviert wird, wenn die Schwelle überschritten wird; und
- eine Anordnung zum Bestimmen einer Geschwindigkeitsschwelle (V1, V2) bezogen auf eine nominale Geschwindigkeitsschwelle für das In-Crash-Sensorsystem in Abhängigkeit von der Objektklassifizierung, wobei die nominale Geschwindigkeitsschwelle die minimale Geschwindigkeit ist, bei der das Fahrzeugsicherheitssystem aktiv ist.

12. Vorrichtung nach Anspruch 11, **gekennzeichnet durch** eine Anordnung zum Festlegen der Geschwindigkeitsschwelle (V2) höher als die nominale Geschwindigkeitsschwelle in Abhängigkeit vom ersten Signal, das kein detektiertes Objekt anzeigt.

13. Vorrichtung nach Anspruch 11, **gekennzeichnet durch** eine Anordnung zum Festlegen der Geschwindigkeitsschwelle (V1) niedriger als die nominale Geschwindigkeitsschwelle in Abhängigkeit vom ersten Signal, das ein als Fußgänger klassifiziertes Objekt anzeigt.

14. Vorrichtung nach Anspruch 11, **gekennzeichnet durch** eine Anordnung zum Festlegen der Geschwindigkeitsschwelle (V2) höher als die nominale Geschwindigkeitsschwelle in Abhängigkeit vom ersten Signal, das ein als Nicht-Fußgänger klassifiziertes Objekt anzeigt.

15. Verfahren zur Aktivierung eines externen Sicherheitssystems zum Schutz eines Fußgängers, wobei das System mindestens zwei Zonen (Z1, Z2) umfasst, die jeweils mit einem Pre-Crash-Sensorsystem ausgestattet sind; eine Vorrichtung zur Aktivierung des externen Sicherheitssystems, wobei die Vorrichtung mit den Pre-Crash-Sensorsystemen (10, 11) und einem In-Crash-Sensorsystem (16) verbunden ist und eingerichtet ist, eine Objektklassifizierung eines ersten Signals vom Pre-Crash-Sensorsystem auszuführen; wobei das Verfahren die folgenden Schritte beinhaltet:
- Ausführen einer Objektklassifizierung eines ersten Signals (A1) vom Pre-Crash-Sensorsystem (10, 11);
- Bestimmen einer Schwelle (T1, T2) für das In-Crash-Sensorsystem (16) in Abhängigkeit von der Objektklassifizierung;
- Festlegen einer ersten Schwelle (T1) in Abhängigkeit von einem ersten Signal (A1), das kein detektiertes Objekt oder ein als Fußgänger klassifiziertes Objekt anzeigt;
- Festlegen einer zweiten Schwelle (T2), die höher ist als die erste Schwelle (T1), in Abhängigkeit von einem ersten Signal (A1), das ein als Nicht-Fußgänger klassifiziertes Objekt anzeigt;
- Vergleichen eines zweiten Signals (A2) vom In-Crash-Sensorsystem (16) mit der Schwelle (T1, T2) und Aktivieren der Vorrichtung, wenn die Schwelle überschritten wird; und
- Bestimmen einer Geschwindigkeitsschwelle (V1, V2) bezogen auf eine nominale Geschwindigkeitsschwelle für das In-Crash-Sensorsystem in Abhängigkeit von der Objektklassifizierung, wobei die nominale Geschwindigkeitsschwelle die minimale Geschwindigkeit ist, bei der das Fahrzeugsicherheitssystem aktiv ist.

16. Verfahren nach Anspruch 15, **gekennzeichnet durch** Festlegen der Geschwindigkeitsschwelle (V2) höher als die nominale Geschwindigkeitsschwelle in Abhängigkeit vom ersten Signal, das kein detektiertes Objekt anzeigt.

17. Verfahren nach Anspruch 15, **gekennzeichnet durch** Festlegen der Geschwindigkeitsschwelle niedriger als die nominale Geschwindigkeitsschwelle in Abhängigkeit vom ersten Signal, das ein als Fußgänger klassifiziertes Objekt anzeigt.

18. Verfahren nach Anspruch 15, **gekennzeichnet durch** Festlegen der Geschwindigkeitsschwelle (V1) höher als die nominale Geschwindigkeitsschwelle in Abhängigkeit vom ersten Signal, das ein als Nicht-Fußgänger klassifiziertes Objekt anzeigt.

19. Verfahren nach Anspruch 15, **gekennzeichnet durch** Bestimmen einer einzelnen Schwelle (T1, T2) für jede Zone (Z1, Z2) in Abhängigkeit von einem ersten Signal (A1) vom Pre-Crash-Sensorsystem (10, 11).

20. Verfahren nach Anspruch 19, **dadurch gekennzeichnet, dass** das externe Sicherheitssystem in jeder Zone (Z1, Z2) einzeln aktiviert wird, wenn die festgelegte Schwelle (T1, T2) überschritten wird.

## Revendications

1. Système de sécurité pour véhicule comprenant un système de sécurité externe destiné à protéger un piéton et un dispositif pour activer le système de sécurité externe, le dispositif étant connecté à un certain nombre de systèmes de détection précollision (10, 11) et à un système de détection en collision (16), le dispositif étant agencé pour effectuer une classification des obstacles d'un premier signal provenant du système de détection précollision ; **caractérisé en ce que** le système de sécurité externe comprend deux zones (Z1, Z2) ou plus dont chacune est pourvue d'un système de détection précollision (10, 11) ; **en ce que** le dispositif est agencé pour déterminer un seuil (T1, T2) pour le système de détection précollision en fonction de la classification des obstacles ; où le dispositif est agencé pour définir un premier seuil (T1) lorsqu'un premier signal (A1) indique une absence d'obstacle détecté ou un obstacle classé en tant que piéton ; et pour définir un second seuil (T2), supérieur au premier seuil (T1), lorsqu'un premier signal (A1) indique un obstacle classé en tant que non-piéton ; **en ce que le** dispositif est agencé pour comparer un second signal provenant du système de détection en collision avec le seuil, moyennant quoi le système de sécurité est activé si le seuil défini (T1, T2) est dépassé ; et **en ce que** le dispositif est agencé pour déterminer un seuil de vitesse (V1, V2) relatif à un seuil de vitesse nominal pour le système de détection en collision en fonction de la classification des obstacles, où le seuil de vitesse nominal est la vitesse minimale à laquelle le système de sécurité pour véhicule est actif.

2. Système de sécurité pour véhicule selon la revendication 1, **caractérisé en ce que** le dispositif est agencé pour définir le seuil de vitesse (V2) plus haut que le seuil de vitesse nominal lorsque le premier signal indique une absence d'obstacle détecté.

3. Système de sécurité pour véhicule selon la revendication 1, **caractérisé en ce que** le dispositif est agencé pour définir le seuil de vitesse plus bas que le seuil de vitesse nominal lorsque le premier signal indique un obstacle classé en tant que piéton.

4. Système de sécurité pour véhicule selon la revendication 1, **caractérisé en ce que** le dispositif est agencé pour définir le seuil de vitesse (V1) plus haut que le seuil de vitesse nominal lorsque le premier signal indique un obstacle classé en tant que non-piéton.

5. Système de sécurité pour véhicule selon l'une quelconque des revendications 1 à 4, **caractérisé en ce que** le système de détection précollision a un champ de vision inférieur à 180°.

6. Système de sécurité pour véhicule selon l'une quelconque des revendications 1 à 5, **caractérisé en ce que** le système de sécurité externe comprend plusieurs composants pyrotechniques (13, 14) agencés pour être activés séquentiellement.

7. Système de sécurité pour véhicule selon l'une quelconque des revendications 1 à 6, **caractérisé en ce que** le système de sécurité externe comprend au moins un lève-capot pyrotechnique (14).

8. Système de sécurité pour véhicule selon l'une quelconque des revendications 1 à 7, **caractérisé en ce que** le système de sécurité externe comprend au moins un coussin gonflable (13) de protection de piéton.

9. Système de sécurité pour véhicule selon l'une quelconque des revendications 1 à 8, **caractérisé en ce que** le dispositif est agencé pour déterminer des seuils individuels (T1, T2 ; V1, V2) pour chaque zone, en fonction d'un premier signal (A1) provenant du système de détection précollision.

10. Système de sécurité pour véhicule selon la revendication 9, **caractérisé en ce que** le système de sécurité externe dans chaque zone est activé individuellement si le seuil (T1, T2 ; V1, V2) défini est dépassé.

11. Dispositif d'activation d'un système de sécurité externe destiné à protéger un piéton, le dispositif étant connecté à un système de détection précollision (10, 11) et à un système de détection en collision (16), le dispositif comprenant :
- un agencement pour effectuer une classification des obstacles d'un premier signal (A1) provenant du système de détection précollision (10, 11) ;
- un agencement pour déterminer un seuil (T1, T2) pour le système de détection en collision (16) en fonction de la classification des obstacles ;
- un agencement pour définir un premier seuil (T1) lorsqu'un premier signal (A1) indique une absence d'obstacle détecté ou un obstacle classé en tant que piéton ;
- un agencement pour définir un second seuil (T2), supérieur au premier seuil (T1), lorsqu'un premier signal (A1) indique un obstacle classé en tant que non-piéton ;
- un agencement pour comparer un second signal (A2) provenant du système de détection en collision (16) avec le seuil (T1, T2), le dispositif étant activé si le seuil est dépassé ; et
- un agencement pour déterminer un seuil de vitesse (V1, V2) relatif à un seuil de vitesse nominal pour le système de détection en collision en fonction de la classification des obstacles, où le seuil de vitesse nominal est la vitesse minimale à laquelle le système de sécurité du véhicule est actif.

12. Dispositif selon la revendication 11, **caractérisé par** un agencement pour définir le seuil de vitesse (V2) plus haut que le seuil de vitesse nominal lorsque le premier signal indique une absence d'obstacle détecté.

13. Dispositif selon la revendication 11, **caractérisé par** un agencement pour définir le seuil de vitesse (V1) plus bas que le seuil de vitesse nominal lorsque le premier signal indique un obstacle classé en tant que piéton.

14. Dispositif selon la revendication 11, **caractérisé par** un agencement pour définir le seuil de vitesse (V2) plus haut que le seuil de vitesse nominal lorsque le premier signal indique un obstacle classé en tant que non-piéton.

15. Procédé d'activation d'un système de sécurité externe destiné à protéger un piéton, lequel système comprend deux zones (Z1, Z2) ou plus, chacune pourvue d'un système de détection précollision ; un dispositif pour activer le système de sécurité externe, le dispositif étant connecté aux systèmes de détection précollision (10, 11) et un système de détection en collision (16) et étant agencé pour effectuer une classification des obstacles d'un premier signal provenant du système de détection précollision ; le procédé comprenant les étapes consistant à :
- effectuer une classification des obstacles d'un premier signal (A1) provenant du système de détection précollision (10, 11) ;
- déterminer un seuil (T1, T2) pour le système de détection en collision (16) en fonction de la classification des obstacles ;
- définir un premier seuil (T1) lorsqu'un premier signal (A1) indique une absence d'obstacle détecté ou un obstacle classé en tant que piéton ;
- définir un second seuil (T2), supérieur au premier seuil (T1), lorsqu'un premier signal (A1) indique un obstacle classé en tant que non-piéton ;
- comparer un second signal (A2) provenant du système de détection en collision (16) avec le seuil (T1, T2), et activer le dispositif si le seuil est dépassé ; et
- déterminer un seuil de vitesse (V1, V2) relatif à un seuil de vitesse nominal pour le système de détection en collision en fonction de la classification des obstacles, où le seuil de vitesse nominal est la vitesse minimale à laquelle le système de sécurité pour véhicule est actif.

16. Procédé selon la revendication 15, **caractérisé par** la définition du seuil de vitesse (V2) plus haut que le seuil de vitesse nominal lorsque le premier signal indique une absence d'obstacle détecté.

17. Procédé selon la revendication 15, **caractérisé par** la définition du seuil de vitesse plus bas que le seuil de vitesse nominal lorsque le premier signal indique un obstacle classé en tant que piéton.

18. Procédé selon la revendication 15, **caractérisé par** la définition du seuil de vitesse (V1) plus haut que le seuil de vitesse nominal lorsque le premier signal indique un obstacle classé en tant que non-piéton.

19. Procédé selon la revendication 15, **caractérisé par** la détermination d'un seuil individuel (T1, T2) pour chaque zone (Z1, Z2), en fonction d'un premier signal (A1) provenant du système de détection précollision (10, 11).

20. Procédé selon la revendication 19, **caractérisé en ce que** le système de sécurité externe dans chaque zone (Z1, Z2) est activé individuellement si le seuil (T1, T2) défini est dépassé.
